# EUROPEAN PATENT SPECIFICATION

(11) **EP 1 732 192 B1**
(45) Date of publication and mention of the grant of the patent: **02.09.2009**
(21) Application number: 05380120.5
(22) Date of filing: 09.06.2005
(51) Int. Cl.: H02K 5/22, H02K 29/08

(54) **Magnetic coupling device for electronically controlled motors, motor incorporating said device and drive unit for mechanical systems**
Magnetischer Flussleiter für elektronisch geregelte Motoren, Motor mit diesem Magnetflussleiter und Antriebseinheit für mechanische Systeme
Guide de flux pour moteurs à commande électronique, moteur comportant ce guide de flux et unité d'entraînement pour systèmes mécaniques

(43) Date of publication of application: 13.12.2006
(73) Proprietor: GRUPO ANTOLIN-INGENIERIA, S.A., 09007 Burgos (ES)
(72) Inventor: Proano del Vicente, César, 09006 Burgos (ES); Ruiz Gonzalez, Bernardino, 33006 Oviedo (ES)
(74) Representative: Carpintero Lopez, Francisco

(56) References cited:
- WO-A-98/27640
- US-A1- 2002 016 087
- US-A1- 2004 178 687
- US-B1- 6 317 332

## Description

### OBJECT OF THE INVENTION

The present invention relates to a magnetic coupling device for electronically controlled motors the control of which is based on measuring the rotation of the motor by means of sensors of variation in the magnetic field.

The device object of said invention is foreseen to be coupled in motors for driving mechanical systems, such as electric window regulators of motor vehicles or other mechanisms driven by a rotating electric motor.

### BACKGROUND OF THE INVENTION

Motor vehicles have a multitude of mechanical systems, such as the increasingly common electric window regulators, sunroofs or seat positioning systems, which being driven by electric motors, have control electronics which act on said motor.

Said control electronics allow, in the specific case of electric window regulators, control of the raising and lowering movement of the window pane, so that at all times one has control over the position, the speed and the acceleration of said window pane, thereby carrying out different functions in a controlled manner, such as the opening and closing thereof, and others such as those related with the detection of the possible presence of objects in their path. The control electronics comprise, among other elements, a printed circuit card and the electric contacts supplying power to the motor, prepared for connection with the corresponding contacts in the motor.

A form of control of the motor is based on measuring the rotation of the motor, for which a rotating magnetic encoder is used, which consists of a magnetic ring coupled to the rotating motor shaft, and one or several sensors, sensitive to changes in the magnetic field, and which, facing the magnetic ring, obtain reliable measurements reflecting the position, and based on the variation in the latter the speed and acceleration of the motor shaft at any time. The signals which said sensors provide, a function of the position of the rotating magnetic field and therefore a function of the variation in the magnetic flux, are processed by the control electronics which in turn regulate the power supply and the operation of the electric motor.

With the object of reducing the costs of production, assembly and testing as much as possible, it is advantageous that the electric motor and the control electronics constitute totally independent and interchangeable units which are assembled to each other according to the specifications of each configuration, although the fact must always be kept in mind that Hall effect sensors are only sensitive to proximate magnetic fields which necessitates that they be located in the proximity of the magnetic loop, which limitation conditions the design and assembly of the electric motor and of the electronic control module.

Usually, the electronic control module comprises a printed circuit card together with the respective control components, the electric power supply contacts of the motor and the Hall effect sensors. Since said sensors must be located near to the magnetic ring coupled to the motor shaft, it is habitual that the Hall effect sensors be mounted on the end of a projection of the electronic module which is inserted through an orifice in the motor casing, so that said sensors are proximate to the magnetic ring. However the imposition that the electronic control module be coupled to the motor casing represents an inconvenience regarding the standardization of the motors, because in this case each electric motor must necessarily be coupled to the corresponding control module. The same thing happens with the relative position between the components which have to be coupled and with the space available for housing the same.

A form of overcoming these limitations consists in avoiding the need for the Hall effect sensors to be located close to the magnetic ring of the motor shaft.

To resolve the problem signified by the distance between the magnetic ring and the Hall effect sensors, the incorporation is known of magnetic flux concentrator elements in a number equal to that of the Hall effect sensors. The flux concentrator elements are elements of high magnetic permeability, generally constituted by a rod of ferromagnetic material, and the object of their incorporation is to concentrate and direct the magnetic field between the magnetic ring which generates it and the Hall effect sensors, thereby allowing greater freedom in the design of the motor and the control module, which can be mounted at a certain distance.

The document EP-1146318-A1 describes an electronic control module for an electric motor which is fixed mechanically on the casing of said motor. The control module object of said invention incorporates the printed circuit card together with the respective control components, the electric power supply contacts of the motor, the Hall effect sensors and the magnetic flux concentrator elements, the last being included in a projection of the electronic module which is inserted in an orifice made for this purpose in the motor casing. This coupling between the electronic control module and the electric motor implies that the motor must be specifically designed to allow the coupling of said module with flux concentrator, which limits the interchangeability of the motor.

The European application EP-1408602-A1 likewise protects an electric motor controlled by means of Hall effect sensors which receive through a number of magnetic flux concentrator elements the signal generated by a magnetic ring coupled to the motor shaft. In this case the control electronics also constitute a module independent of the motor, although the different embodiments of the invention envisage several possible locations of the magnetic flux concentrator elements. In a first embodiment part of the elements which constitute the magnetic flux concentrator are mounted inside the motor casing and the rest inside the control module, which requires that the concentrators of the part corresponding to the motor and of the control part are facing each other, making magnetic connection. Other possibilities considered consist in that the flux concentrators are only inside the motor, inside the control module or that they are between the motor and the control module in the event that the latter are separated by a certain distance. In all the embodiments considered it is a substantial drawback that the motor and the control module are not totally independent components, which conditions, among other things, the selection of the type of motor and of the most suitable type of electronics, in an independent fashion.

In the light of the foregoing the objective of the present invention is to develop a magnetic coupling device the application of which is not limited *a priori* by the configuration of determined models of motor and of control modules.

The U.S. Patent US-6-317-332 describes an electronic module for an electric Motor operated drive unit.

### DESCRIPTION OF THE INVENTION

After studying the drive units of known mechanical systems, it has been found that it would be convenient that the magnetic flux concentrator elements do not form *a priori* either part of the electric motor or of the electronic control module, which would signify a benefit in terms of logistics and standardization in the components of the system leading to the obtaining of cost reductions, an increased possibility of combining different motors with different control modules, and it would also allow the same electric motor to be used both in applications in which electronic control is required and in those in which said control is not necessary, for example in the models of motor vehicles in which there are different levels of features in the operation of the window regulators.

An object of the invention is a magnetic coupling device for electric motors of those which use an electronic control module based on measuring the position obtained from the variation in a magnetic field associated with the shaft of the rotor which constitutes an independent piece, both of the motor and of the electronic control module, and which does not affect the mutual coupling between both, that is, the electronic control device can be coupled to a motor which incorporates previously mounted the coupling device of the invention or on a motor which does not incorporate this device.

The magnetic coupling device is foreseen for its assembly on a motor, independently of whether this motor is controlled by an electronic module and, therefore, on the motor, with the magnetic coupling device previously mounted it would be possible to couple the electronic module or to use the motor without electronic module.

According to the invention this problem is solved by a magnetic coupling device as defined in claim 1, by an electric motor as defined in claim 7, by a drive unit as defined in claim 9 and by a window regulator system as defined in claim 13.

Further embodiments of the invention are defined in dependent claims 2 - 6, 8 and 10 - 12.

The magnetic coupling device comprises a support element and at least one magnetic flux concentrator element, mounted on the support.

The support element is configured so that it can be coupled in correspondence with an orifice made in the casing of the electric motor in which it is housed according to a predefined position. This element, as its name indicates, serves as support for at least one magnetic flux concentrator element the purpose of which, as will be seen later, is that of concentrating and directing the magnetic flux from the source of the magnetic field located inside the casing of the electric motor to the outside of the casing, thereby allowing the electronic control of said motor by means of magnetic flux sensors located on the outside of the motor.

The concentrator element is configured so that, when the support element is coupled in correspondence with the orifice of the motor casing, said magnetic flux concentrator element has a first part inside the motor casing, in order to be exposed to a magnetic field inside said casing, and a second part outside the motor casing, so that the second part can be located in correspondence with at least one magnetic field sensor external to the motor.

The magnetic coupling device is configured so that, when coupled on the motor the operation of which it is desired to regulate by means of an electronic module of external control, the orifice of the motor casing is left partially free to allow the passage of the electric contacts, to connect the electronic control module electrically with the motor. Through said electric contacts the electronic control module feeds the motor in a controlled manner, thereby regulating its operation.

Obviously, the electric coupling electric connection between the electronic control module and the motor is produced by means of the coupling of electric contacts located on the motor itself and electric contacts foreseen on the electronic control module, so that either one or the other have to pass through the orifice foreseen in the motor casing.

Specifically, the passage of said electric contacts can be achieved by making the section of the support element of the magnetic coupling device smaller than the orifice of the casing on which it is coupled, so that said coupling gives rise to a small space through which the electric contacts either of the motor or of the electronic control module can have access. The possibility can also be considered that the coupling between the support element and the orifice is a close-fitting coupling, that is, no space at all is left between support element and perimeter of the orifice, in which case the support element comprises at least one through-hole which affects all its height and through which the electric contacts can pass.

The support element of the magnetic coupling device can be configured so that its coupling in the orifice of the motor casing takes place in a close-fitting manner, tightly, also having a geometry or special external form to be coupled in the orifice of the casing which, in this case, will have a geometry or form complementary with that of the support element so one fits perfectly in the other in a unique position. Also the possibility is envisaged that said support element comprises at least one retention element to be connected or coupled in a more secure manner to the orifice of the casing, maintaining the support element in its position inside the orifice of the casing.

It has also been foreseen that the magnetic coupling device can remain simply housed in the orifice of the motor casing, being retained in its position by the electronic control module.

As has already been indicated above, the device comprises at least one magnetic field concentrator element which directs and concentrates the magnetic field from the inside of the casing to at least one magnetic sensor located outside said casing. This magnetic field concentrator element can consist at least of one rod of a material with high magnetic permeability. Said rod is extended, traversing the support element and with its ends projecting from the respective surfaces of the support element, from a first end, which when the device is coupled will be located inside the casing, to a second end which will be located in correspondence with the corresponding magnetic sensor.

The support element of the magnetic coupling device can be manufactured in plastic material, which material is suitable for this application for its reduced cost and low density, which signifies a reduction in the weight of the piece, as well as simplicity in obtaining the piece by moulding. Nevertheless the possibility is envisaged that the support element be configured from any other material which is considered appropriate.

The electric motor comprises a stator and a rotor which is coupled to a shaft which rotates. Both elements, rotor and stator, are housed inside a casing provided with an orifice.

In order to know the speed of rotation of the shaft of the rotor or its acceleration, from its angular position, the rotor is equipped with a magnetic field source connected to said shaft, so that the variations in the magnetic field allow the calculation in real time of the position, the speed or the angular acceleration of the shaft. With the objective of concentrating and directing the magnetic field produced inside the casing to the exterior thereof, the motor comprises a magnetic coupling device as has been described above, the support element of said device being coupled in correspondence with the orifice of the motor casing.

When the support element of the magnetic coupling device has been coupled in correspondence with the orifice of the casing, the field concentrator element of said device will be located so that its first end, which is housed inside the casing which encloses the rotor and the stator of the motor, is located in the proximity of the source of the magnetic field which, as indicated above, is connected to the shaft of rotation of the rotor. Given this physical proximity, the concentrator element will be able to capture a significant part of the magnetic flux produced and will be able to direct it through all its length, from said first end to its second end, located outside of the casing and in correspondence with at least one magnetic sensor outside the motor.

The means of producing the magnetic field, located inside the motor casing and connected to the shaft of rotation of the rotor, can consist of a magnetic crown or ring coupled around the shaft of the rotor. The possibility is considered nevertheless of including any other means which produces the same effect, that is, which produces a variable magnetic field in the space according to the position, speed and acceleration of the rotor of the motor.

The drive unit is for a mechanical system, for example, the aforementioned window regulator system for motor vehicles. The drive unit comprises a motor according to claims 7 or 8, such as that described above, and is complemented with an electronic control module which is mounted on the motor-coupling device assembly, through the same orifice in which the coupling device is mounted and whose purpose is, as its name indicates, to control and regulate the operation of the motor which drives the mechanical system.

The electronic control module comprises electronic means of control and a magnetic sensor which, when the module is coupled to the motor-magnetic coupling device assembly, is situated proximate to the second end of each of the magnetic field concentrator elements of the magnetic coupling device.

The incorporation of said magnetic sensors, which can be, for example, Hall effect sensors, allows the magnetic field produced inside the motor casing, when concentrated and directed by the field concentrators of the device to the outside of said casing, to reach said magnetic sensor. In this way the electronic means of control receive information from said sensors and know the position reliably and at all times, and calculate the speed and the angular acceleration of the rotor of the motor, having therefore the necessary information to be able to regulate the operation of said motor, which regulation is achieved through the electric contacts which, from said electronic control module, are extended until being connected with corresponding contacts located on the motor. The connection between both sets of contacts can be made both inside the motor casing and on that of the motor casing. In any case there will always be a set of contacts which will have to depart from its own casing and extend to the inside of the other casing in which those corresponding are situated, and in some way cross the gap defined by the support element of the field concentrator.

The possibility is envisaged, already mentioned above, that the support element of the magnetic coupling device comprises a through-hole which allows the passage of said electric contacts through the same, or that between said support element and the orifice of the casing there is a free space through which said electric contacts penetrate inside the casing.

With the objective of giving greater versatility to the connection of the electric motor and the electronic control module, the possibility is envisaged that the electronic control module comprises a portion of coupling configured so that it can be coupled in the orifice of the motor casing, whether the magnetic coupling device has been coupled or not. To guarantee the seal in the coupling area of the electronic control module with the orifice of the casing, the portion of coupling can comprise a sealing element, such as a gasket which adapts to the perimeter of said portion. This sealing element prevents dust, water, moisture or other harmful elements from entering inside the motor casing, protecting it from the medium which surrounds it.

The window regulator system for motor vehicles comprises a drive unit according to claims 9-12.

The fact that the magnetic coupling device constitutes an element independent of the electric motor and of the electronic control module signifies an important advantage in comparison with the known field concentrators, because it allows a standard motor to be used instead of a motor specially adapted to the configuration of the electronics, further allowing the use of a same electric motor for both a mechanical system which requires electronic control and for one which does not require it, because the electronic control module can be coupled to the electric motor whether the magnetic coupling device is incorporated between the two or not. Another advantage of the invention resides in the reduced size and cost of the coupling device, which simplifies the manufacture of devices which can be coupled to the different types of motor, for which it is sufficient to vary the size and the form of the support element of the device, so that said element adapts to the orifices made in the casings of the different models of motor.

### DESCRIPTION OF THE DRAWINGS

To complete the description that is being made and with the object of assisting in a better understanding of the characteristics of the invention, in accordance with a preferred example of practical embodiment thereof, said description is accompanied, as an integral part thereof, with a set of drawings wherein by way of illustration and not restrictively, the following has been represented:
Figure 1. - It shows a view in perspective of the magnetic coupling device in accordance with a preferred embodiment of the invention.
Figure 2. - It shows a view of the motor comprising the magnetic coupling device.
Figure 3. - It shows a view in detail of the portion of coupling of the electronic control module.
Figure 4. - It shows an exploded view of the drive unit of mechanical systems formed by the motor, the magnetic coupling device and the electronic control module.
Figure 5. - It shows a view in perspective of the assembled drive unit.
Figure 6. - It shows the cross-section produced on the plane A-A of figure 5.

### PREFERRED EMBODIMENT OF THE INVENTION

In the light of the foregoing figures, an example of embodiment of the invention can be observed.

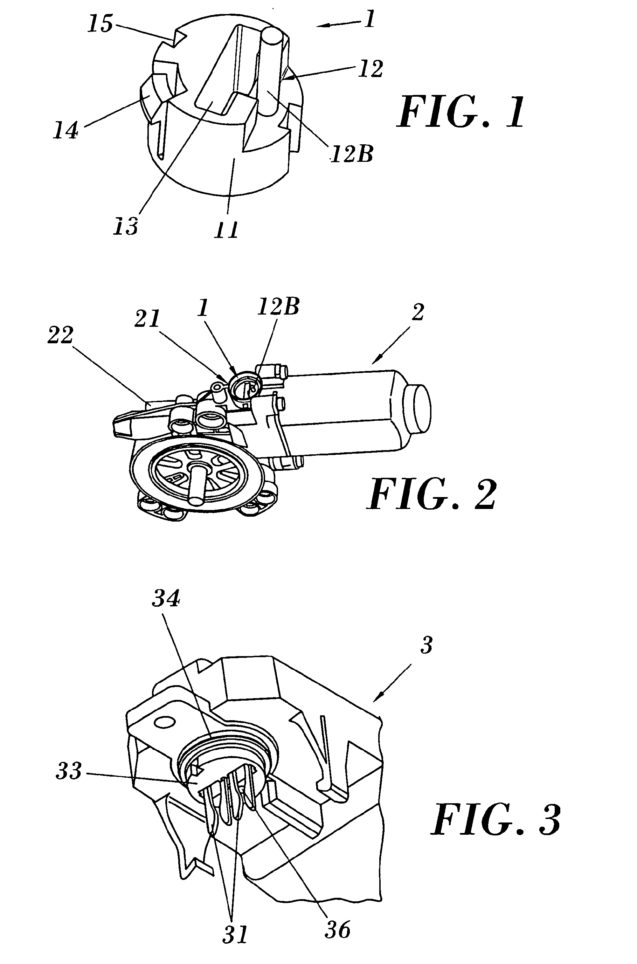

Figure 1 represent a view in perspective of a magnetic coupling device (1) according to a preferred embodiment, in which the support element (11) is a body basically cylindrical in form which incorporates a number of vertical grooves (15) and flexible retention elements (14) on its perimeter for the purpose of permitting its close-fitting coupling, and with irreversible character, in the orifice (21) of the casing (22) of the motor (2) in which said coupling will be installed and secured, permitting also the fitting through its upper base of the electronic control module (3). The support element (11) comprises in this specific embodiment represented in the figures a through-hole (13) which affects its entire height, so that, as will be explained below, it facilitates the passage through it of the electric contacts (31) between the electronic control module (3) and the electric motor (2) when the electronic control module (3) is assembled on the motor (2).

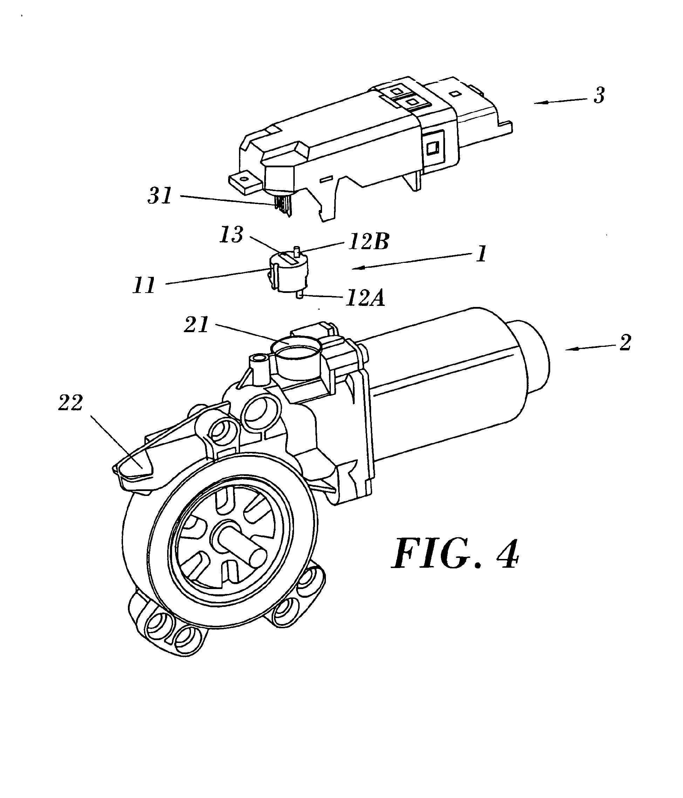

The support element (11) sustains the magnetic field concentrator element (12) which, in this embodiment, consists of a rod of ferromagnetic material which traverses the support element (11), extending both upwardly and downwardly from its respective top and bottom bases. The first part (12A) of said concentrator element (12) is that which, when the device (1) is coupled on the motor (2), is inside the casing (22), proximate and exposed to the magnetic field associated with the motor shaft. In this first figure first part (12A) is not observed, however in the figure 4 it is, in which the drive unit is shown in exploded form. What is appreciable in figure 1 is the second part (12B) of the field concentrator element (12), which part extends upwardly from the support element (11) and which, being outside the casing (22) of the motor (2), will be mounted in correspondence with a magnetic sensor, which sensor consists of a Hall effect sensor (32) in this embodiment.

Figure 2 shows an electric motor (2) according to the invention, which motor (2) comprises a magnetic coupling device (1), housed, fitted tightly, in the orifice (21) which is made in the casing (22) of the motor (2). As can be observed in this figure, when the device (1) is inserted in the orifice (21), only the second part (12B) of the magnetic field concentrator element (12) projects with respect to the casing (22) of the motor (2), so that the incorporation of said device (1) does not impede the coupling of the electronic control module (3) in the orifice (21).

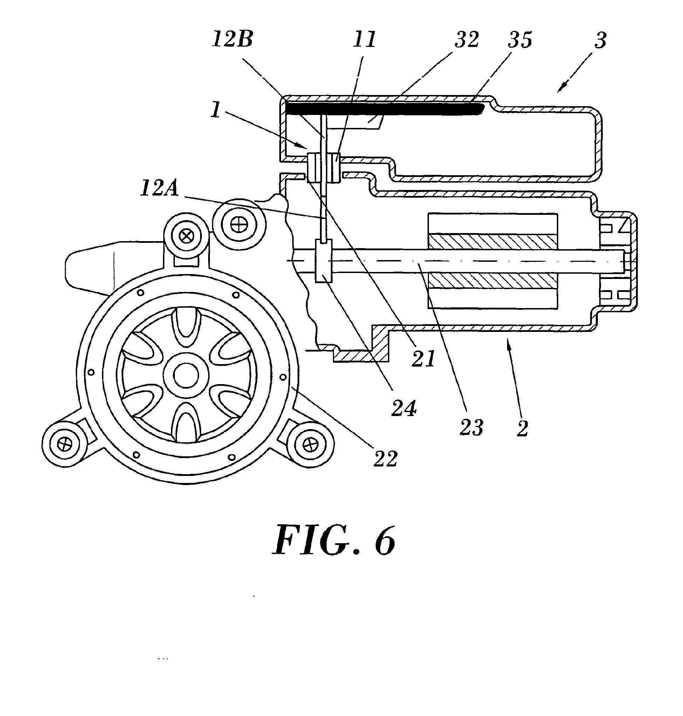

The electric motor (2), as is shown in figure 6 corresponding to the longitudinal cross-section of the drive unit, comprises a stator and a rotor, said rotor being equipped with a magnetized ring fixed firmly to the shaft of the rotor as a means of producing a magnetic field, in this case a magnetic ring (24) mounted around the shaft (23) of the rotor and joined to it in an integral manner, so that this varies according to the angular position of said rotor. In said figure 6 it is appreciated how the first part (12A) of the concentrator element (12) is located very proximate to the magnetic ring (24), so that it is exposed to the magnetic field created by said ring.

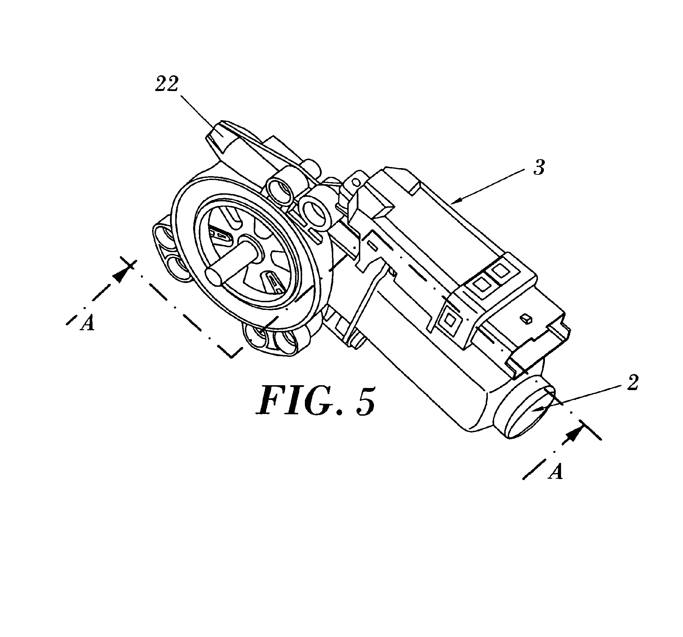

The electronic control module (3), which in this embodiment holds all its components inside a casing, has been represented in figure 4 in its assembling position and in figure 5 when assembled on the casing (22) of the motor (2). Inside the casing of said electronic module (3), as is observed in figure 6, the electronic means of control (35) and the Hall effect sensor (32) located in correspondence with the second part (12B) of the magnetic field concentrator element (12) are mounted.

In figure 3 the coupling portion (33) of the electronic module (3) has been represented in detail, which portion is configured to adapt to the orifice (21) of the casing (22) of the motor (2), whether the magnetic coupling device (1) has been mounted or not. Through the coupling portion (33) the electric contacts (31) emerge to the exterior of the electronic module (3), so that when the unit is assembled, according to figures 4 and 5, said electric contacts (31) penetrate inside the casing (22) of the motor (2) through the orifice (13) which traverses the support element (11) of the device (1). In figure 3 the inlet orifice (36) is appreciated through which the second part (12B) of the concentrator element (12) penetrates into the electronic control module (3), as well as the sealing element (34) which, when the motor (2) and the electronic module (3) have been assembled, prevents foreign elements from entering the drive unit.

Figures 4 and 5, as already mentioned, represent the sequence of assembling the drive unit which comprises the electric motor (2), the electronic control module (3) which regulates the operation of said motor (2) and the magnetic coupling device (1) which concentrates and directs the magnetic field produced inside the motor (2) to the interior of the electronic module (3), so that said module can, in terms of the variations of said generated field, act appropriately on the motor (2). Figure 4 represents the disposition of these three components (1, 2, 3) before being assembled.

Figure 5 shows the drive unit according to the invention after assembling the motor (2), the electronic module (3) and the coupling device (1), which is not appreciated for being coupled on the inside of the orifice (21).

Figure 6 represents the longitudinal cross-section at the plane A-A of figure 5 and therein part of the components are observed of the motor (2) and of the electronic module (3) which are not visible in the remaining figures through being held inside the casings of the two elements (2, 3). The disposition is also appreciated of the first part (12A) of the concentrator element (12), in correspondence with the magnetic ring (24) coupled to the shaft of the rotor (23), and the disposition of the second part (12B) of the concentrator element (12), in correspondence with the Hall effect sensor (32) included in the electronic control module (3).

## Claims

1. Magnetic coupling device for electric motors (2), driven by an external electronic control module (3) which is coupled to the motor (2), through a orifice (21) foreseen in the casing (22) of the motor (2), to allow the passage of electric power supply contacts (31) between the motor (2) and the electronic control module (3), the magnetic coupling device (1) comprising a support element (11) and at least one magnetic flux concentrator element (12) mounted in the aforesaid support element (11), **characterised in that**
said support element (11) is configured as a separate part relative to the external electronic control module (3) and motor (2),
and wherein said at least one magnetic flux concentrator element (12), consist of a rod which passes through the support element (11) and which has two ends (12A, 12B) which project with respect to the respective surfaces of the support element (11),
and wherein the external form of the support element (11) is configured to be coupled in the corresponding form of the orifice (21) of the casing (22) of the motor (2), to define a fixed position of assembly of the support element (11) in the aforesaid orifice (21), leaving the orifice (21) partially free for the passage of the electric power supply contacts (31) between the electric motor (2) and the electronic control module (3).

2. Magnetic coupling device, according to claim 1, **characterized in that**, when the aforesaid support element (11) is housed in the orifice (21) in the casing (22) of the motor (2), said magnetic flux concentrator element (12) has a first part (12A) inside the casing (22) of the motor (2), in order to be exposed to a magnetic field inside said casing (22), and second part (12B) outside the casing (22) of the motor (2), so that said second part (12B) is located with at least one sensor of magnetic field variation included in the electronic control module (3).

3. Magnetic coupling device according to claim 1, **characterized in that** the support element (11) comprises a through-hole (13) which allows the passage of electric contacts (31).

4. Magnetic coupling device according to any one of the previous claims, **characterized in that** the support element (11) is housed in the orifice (21) of the casing (22) of the motor (2), in a snugly fitting manner.

5. Magnetic coupling device according to any one of the previous claims, **characterized in that** the support element (11) comprises at least one flexible retention element (14) which maintains the support element (11) in its position in the orifice (21) of the casing (22) of the motor (2).

6. Magnetic coupling device, according to claim 1, **characterized in that** the support element (11) is retained in the orifice (21) by means of the electronic control module (3).

7. Electric motor (2) which comprises a rotor and a stator housed in a casing (22), the rotor being equipped with means for generating a magnetic field associated with the shaft (23) of rotation of said rotor, to allow detection of the speed of rotation and/or angular position of the shaft (23) of the rotor based on a detection of variations in said magnetic field associated with the movement of said shaft, the aforesaid casing (22) having an orifice (21) for the coupling of an electronic module of external control **characterized in that** it comprises a magnetic coupling device (1) according to any one of the previous claims.

8. Electric motor according to claim 7, **characterized in that** the means of generating a magnetic field associated with the movement of the rotor consists of a magnetic ring (24) coupled around the shaft (23) of the rotor.

9. Drive unit for a mechanical system which comprises:
- an electric motor (2) according to any one of claims 7 or 8 and
- an electronic control module (3) which comprises electronic means of controlling and supplying power to the electric motor (2) and at least one sensor of magnetic field variation.

10. Drive unit according to claim 9, in which said, at least one, sensor of magnetic field variation is a Hall effect sensor (32).

11. Drive unit according to claim 9, in which the electronic control module (3) comprises a coupling portion (33) configured to be coupled, in a reversible manner, in the orifice (21) in the casing (22) of the motor (2).

12. Drive unit according to claim 9, in which the electronic control module (3) comprises electric contacts (31) which pass through the free space defined in the orifice (21) by the support element (11).

13. Window regulator system of motor vehicles which comprises a drive unit according to any one of claims 9 to 12.

## Patentansprüche

1. Magnetische Kopplungsvorrichtung für Elektromotoren (2), die durch ein externes elektronisches Steuermodul (3) getrieben sind, das mit dem Motor (2) durch eine in dem Gehäuse (22) des Motors (2) vorgesehene Öffnung (21) verbunden ist, die den Durchtritt elektrischer Stromzuführkontakte (31) zwischen dem Motor (2) und dem elektronischen Steuermodul (3) ermöglicht, wobei die magnetische Kopplungsvorrichtung (1) ein Halteelement (11) und mindestens ein Magnetflusskonzentratorelement (12) aufweist, das an dem Halteelement (11) angeordnet ist, **dadurch gekennzeichnet, dass**
das Halteelement (11) relativ zu dem elektronischen Steuermodul (3) und dem Motor (2) als separates Teil konfiguriert ist,
und wobei das mindestens eine Magnetflusskonzentratorelement (12) aus einem Stab besteht, der durch das Halteelement (11) hindurch verläuft und der zwei Enden (12A,12B) hat, die relativ zu den betreffenden Oberflächen des Halteelements (11) vorstehen,
und wobei die äußere Form des Halteelements (11) derart konfiguriert ist, dass das Halteelement derart in der entsprechenden Form der Öffnung (21) des Gehäuses (22) des Motors (2) befestigt werden kann, dass eine feste Anbringungsposition des Halteelements (11) in der Öffnung (21) definiert ist, wobei die Öffnung (21) dahingehend teilweise frei belassen wird, dass ein Durchtritt der elektrischen Stromzuführkontakte (31) zwischen dem Elektromotor (2) und dem elektronischen Steuermodul (3) ermöglicht wird.

2. Magnetische Kopplungsvorrichtung nach Anspruch 1, **dadurch gekennzeichnet, dass**, wenn das Halteelement (11) in der Öffnung (21) des Gehäuses (22) des Motors (2) untergebracht ist, das Magnetflusskonzentratorelement (12) mit einem ersten Teil (12A) innerhalb des Gehäuses (22) des Motors (2) angeordnet ist, um einem in dem Gehäuse (22) existierenden Magnetfeld ausgesetzt zu sein, und mit einem zweiten Teil (12B) außerhalb des Gehäuses (22) des Motors (2) angeordnet ist, so dass der zweite Teil (12B) an mindestens einem Sensor für Magnetfeldvariation angeordnet ist, der in dem elektronischen Steuermodul (3) enthalten ist.

3. Magnetische Kopplungsvorrichtung nach Anspruch 1, **dadurch gekennzeichnet, dass** das Halteelement (11) eine Durchgangsöffnung (13) aufweist, die den Durchtritt elektrischer Kontakte (31) ermöglicht.

4. Magnetische Kopplungsvorrichtung nach einem der vorherigen Ansprüche, **dadurch gekennzeichnet, dass** das Halteelement (11) mit Pass-Sitz in der Öffnung (21) des Gehäuses (22) des Motors (2) untergebracht ist.

5. Magnetische Kopplungsvorrichtung nach einem der vorherigen Ansprüche, **dadurch gekennzeichnet, dass** das Halteelement (11) mindestens ein flexibles Rückhalteelement (14) aufweist, welches das Halteelement (11) in seiner Position in der Öffnung (21) des Gehäuses (22) des Motors (2) hält.

6. Magnetische Kopplungsvorrichtung nach Anspruch 1, **dadurch gekennzeichnet, dass** das Halteelement (11) in der Öffnung (21) mittels des elektronischen Steuermoduls (3) rückgehalten wird.

7. Elektromotor (2) mit einem Rotor und einem Stator, die in einem Gehäuse (22) untergebracht sind, wobei der Rotor mit einer Vorrichtung zum Erzeugen eines Magnetfelds in Abhängigkeit von der Drehwelle (23) des Rotors versehen ist, um zu ermöglichen, die Drehgeschwindigkeit und/oder Winkelposition der Welle (23) des Rotors basierend auf der Detektion von Veränderungen des von der Bewegung der Welle abhängigen Magnetfelds zu detektieren, wobei das Gehäuse (22) eine Öffnung (21) für den Anschluss eines elektronischen Moduls einer externen Steuerung aufweist, **dadurch gekennzeichnet, dass** der Elektromotor eine magnetische Kopplungsvorrichtung (1) nach einem der vorherigen Ansprüche aufweist.

8. Elektromotor nach Anspruch 7, **dadurch gekennzeichnet, dass** die Vorrichtung zum Erzeugen eines von der Bewegung des Rotors abhängigen Magnetfelds aus einem um die Welle (23) des Rotors befestigten Magnetring (24) besteht.

9. Antriebseinheit für ein mechanisches System, wobei die Antriebseinheit aufweist:
- einen Elektromotor (2) nach einem der Ansprüche 7 und 8, und
- ein elektronisches Steuermodul (3) mit einer elektronischen Vorrichtung zum Steuern des Elektromotors (2) und zum Zuführen von Energie zu diesem, und mit mindestens einem auf Magnetfeldveränderung ansprechenden Sensor.

10. Antriebseinheit nach Anspruch 9, bei der der mindestens eine auf Magnetfeldveränderung ansprechende Sensor ein Hall-Effekt-Sensor (32) ist.

11. Antriebseinheit nach Anspruch 9, bei der das elektronische Steuermodul (3) einen Befestigungsteil (33) aufweist, der zur reversiblen Befestigung in der Öffnung (21) des Gehäuses (22) des Motors (2) konfiguriert ist.

12. Antriebseinheit nach Anspruch 9, bei der das elektronische Steuermodul (3) elektrische Kontakte (31) aufweist, die durch den in der Öffnung (21) von dem Halteelement (11) definierten freien Raum hindurch verlaufen.

13. Fensterregulatorsystem für Kraftfahrzeuge, mit einer Antriebseinheit nach einem der Ansprüche 9 bis 12.

## Revendications

1. Dispositif de couplage magnétique pour des moteurs électriques (2), entraînés par un module externe de commande électronique (3) couplé au moteur (2) par un orifice (21) prévu dans le boîtier (22) du moteur (2) pour permettre le passage des contacts d'alimentations électriques (31) entre le moteur (2) et le module de commande électronique (3),
le dispositif de couplage magnétique (1) comportant un élément de support (11) et au moins un élément concentrateur de flux magnétique (12) installé dans l'élément de support (11),
**caractérisé en ce que**
l'élément de support (11) est configuré comme pièce distincte par rapport au module externe de commande électronique (3) et au moteur (2) et
au moins un élément concentrateur de flux magnétique (12) se compose d'une tige traversant l'élément de support (11) ayant deux extrémités (12A, 12B) venant en saillie par rapport aux surfaces respectives de l'élément de support (11) et
la forme extérieure de l'élément de support (11) est configurée pour être couplée à la forme correspondante de l'orifice (21) du boîtier (22) du moteur (2) pour définir une position fixe de l'assemblage de l'élément de support (11) dans l'orifice (21), laissant l'orifice (21) partiellement dégagé pour le passage des contacts d'alimentations électriques (31) entre le moteur électrique (2) et le module de commande électronique (3).

2. Dispositif de couplage magnétique, selon la revendication 1,
**caractérisé en ce que**
lorsque l'élément de support (11) est logé dans l'orifice (21) du boîtier (22) du moteur (2), l'élément concentrateur de flux magnétique (12) a une première partie (12A) à l'intérieur du boîtier (22) du moteur (2), pour être exposée au champ magnétique à l'intérieur du boîtier (22) et une seconde partie (12B) à l'extérieur du boîtier (22) du moteur (2) pour que cette seconde partie (12B) soit située avec au moins un capteur de variation de champ magnétique dans le module de commande électronique (3).

3. Dispositif de couplage magnétique, selon la revendication 1,
**caractérisé en ce que**
l'élément de support (11) comporte un orifice traversant (13) permettant le passage des contacts électriques (31).

4. Dispositif de couplage magnétique, selon une quelconque des revendications précédentes,
caractérisant ce que
l'élément de support (11) est logé dans l'orifice (21) du boîtier (22) du moteur (2) de façon à être adapté étroitement.

5. Dispositif de couplage magnétique, selon une quelconque des revendications précédentes,
caractérisant ce que
l'élément de support (11) comporte au moins un élément de rétention (14), souple qui maintient en place l'élément de support (11) dans l'orifice (21) du boîtier (22) du moteur (2).

6. Dispositif de couplage magnétique selon la revendication 1,
**caractérisé en ce que**
l'élément de support (11) est retenu dans l'orifice (21) par le module de commande électronique (3).

7. Moteur électrique (2) comportant un rotor et un stator logés dans un boîtier (22), le rotor étant équipé de moyens générant un champs magnétique, associés à l'arbre (23) de rotation du rotor pour permettre de détecter la vitesse de rotation et/ou la position angulaire de l'arbre (23) du rotor en fonction de la détection des variations du champ magnétique associé au mouvement de l'arbre, le boîtier (22) ayant un orifice (21) pour coupler le module électronique de commande externe,
**caractérisé en ce qu'**
il comporte un disposition de couplage magnétique (1) selon une quelconque des revendications précédentes.

8. Moteur électrique selon la revendication 7,
**caractérisé en ce que**
le moyen générant un champ magnétique associé au mouvement du rotor est composé d'un anneau magnétique (24) couplé à l'arbre (23) du rotor.

9. Unité d'entraînement d'un système mécanique comportant :
- un moteur électrique (2) selon une quelconque des revendications 7 ou 8 et
- un module de commande électronique (3) a un moyen électronique de commande et l'alimentation du moteur électrique (2) ainsi qu'au moins un capteur de la variation du champ magnétique.

10. Unité d'entraînement selon la revendication 9,
**caractérisée en ce qu'**
au moins le capteur de variation de champ magnétique est un capteur à effet Hall (32).

11. Unité d'entraînement selon la revendication 9,
**caractérisée en ce que**
le module de commande électronique (3) comporte une partie de couplage (33) configurée pour être couplée de manière réversible à l'orifice (21) du boîtier (22) du moteur (2).

12. Unité d'entraînement selon la revendication 9,
caractérisant ce que
le module de commande électronique (3) comporte des contacts électriques (31) traversant l'espace libre défini dans l'orifice (21) par l'élément de support (11).

13. Système de régulation de fenêtre pour des véhicules automobiles comportant une unité d'entraînement selon une quelconque des revendications 9 à 12.
